# EUROPEAN PATENT SPECIFICATION

(11) **EP 2 287 063 B1**
(45) Date of publication and mention of the grant of the patent: **03.04.2013**
(21) Application number: 10173384.8
(22) Date of filing: 19.08.2010
(51) Int. Cl.: B62D 1/185, B62D 1/19

(54) **Steering column**
Lenksäule
Colonne de direction

(30) Priority: 21.08.2009 JP 2009191933
(43) Date of publication of application: 23.02.2011
(73) Proprietor: JTEKT CORPORATION, Osaka-shi Osaka 542-8502 (JP)
(72) Inventor: Watanabe, Mutsumi, Osaka-shi, Osaka 542-8502 (JP)
(74) Representative: TBK

(56) References cited:
- JP-A- 2007 168 569
- JP-A- 2009 107 540
- US-A- 4 805 478

## Description

### BACKGROUND OF THE INVENTION

### 1. Field of the Invention

The invention relates to a vehicle steering column including a telescopic mechanism and an impact absorbing mechanism.

### 2. Description of the Related Art

A steering column as described in the preamble of claim 1 is disclosed in, for example, Japanese Patent Application Publication No. 2007-168569 (JP-A-2007-168569). FIG 7 shows a partially cross-sectional structure of the steering column. The steering column includes a housing 1 supported by a vehicle body. The housing 1 slidably supports a cylindrical outer tube 3 via bearings 2a and 2b.

Tensioner bushings 4a and 4b each of which is formed of a disc spring are arranged in the housing 1 so as to press the outer peripheral surface of the outer tube 3. The outer tube 3 is coupled with an actuator (not shown), and is driven by the actuator to move in a direction indicated by the arrow a1. A cylindrical inner tube 6 is arranged inside the outer tube 3 via a bushing 5.

A steering shaft 8 is arranged inside the inner tube 6 via a bearing 7 so that the steering shaft 8 is rotatable about the axis m in the drawing. The steering shaft 8 is formed of an upper shaft 8a and a lower shaft 8b. A steering wheel (not shown) is coupled with the upper end portion of the upper shaft 8a. A steering mechanism (not shown) is coupled with the base end portion of the lower shaft 8b. The upper shaft 8a and the lower shaft 8b are coupled with each other by spline engagement. The upper shaft 8a is relatively movable in the direction indicated by the arrow a1 with respect to the lower shaft 8b.

In the thus structured steering column, as the outer tube 3 is moved in the direction indicated by the arrow a1 by the actuator, the inner tube 6 moves in the direction indicated by the arrow a1 together with the outer tube 3. With the movement of the inner tube 6, the upper shaft 8a relatively moves in the direction indicated by the arrow a1 with respect to the lower shaft 8b so that the steering shaft 8 extends in the direction indicated by the arrow a1. After the steering shaft 8 extends in the direction indicated by the arrow a1 in this way, the outer tube 3 is moved in the direction indicated by the arrow a2 by the actuator. Thus, the steering shaft 8 retracts in the direction indicated by the arrow a2. The telescopic mechanism is configured so as to be able to adjust the axial position of the steering wheel by extending or retracting the steering shaft 8 in this way.

In addition, in the event of a collision of a vehicle with an obstacle, the steering column operates as follows. As a force exceeding a static friction force between the inner tube 6 and the metal bushing 5 acts on the outer tube 3 due to a collision, the outer tube 3 and the bushing 5 relatively move in the direction indicated by the arrow a1 with respect to the inner tube 6 against the friction force. That is, the housing 1 relatively moves with respect to the steering shaft 8. The housing 1 relatively moves with respect to the steering shaft 8 so that impact energy transmitted from the housing 1 to the steering shaft 8 is absorbed and the steering column and the steering wheel are prevented from being pushed out into a vehicle cabin. In addition, because the steering shaft 8 relatively moves with respect to the housing 1, it is possible to absorb impact energy generated when a passenger moved toward the front of the vehicle in the event of a collision collides with the steering wheel, the steering column, or the like. That is, in the steering column, the outer tube 3, the inner tube 6, the bushing 5, and the like, constitute the impact absorbing mechanism.

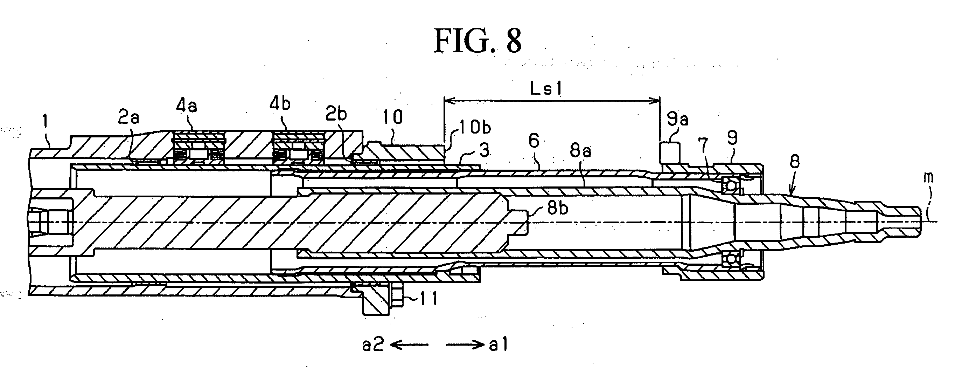

The steering column having the above-described telescopic mechanism generally includes a retaining structure that prevents the outer tube 3 from slipping off from the housing 1. FIG. 8 is a cross-sectional structure of an example of a steering column that has such a retaining structure.

In the steering column shown in FIG. 8, a cylindrical cap portion 9 is assembled to the upper end portion of the inner tube 6, and a stopper 9a is formed at the base end portion of the cap portion 9 so as to protrude outward. In addition, in the steering column, the base end portion of the inner tube 6 is inserted into the outer tube 3 and then they are swaged. Thus, the tubes 3 and 6 are coupled with each other. A cylindrical retaining member 10 having an inside diameter smaller than the inside diameter of the housing 1 is arranged at the upper end portion of the housing 1, and the outer tube 3 is inserted in the retaining member 10. Then, the retaining member 10 is assembled to the housing 1 with a bolt 11. In addition, although not shown in the drawing, the outer tube 3 has a large outside diameter portion and a small outside diameter portion in an area from the base end portion to the upper end portion, and a step is formed on the outer peripheral surface of the outer tube 3 at the boundary between the large outside diameter portion and the small outside diameter portion.

In the thus structured steering column, as the outer tube 3 moves in the direction indicated by the arrow a1, the step formed on the outer peripheral surface of the outer tube 3 contacts a base-end-side end surface of the retaining member 10 to thereby restrict movement of the outer tube 3 in the direction indicated by the arrow a1. Movement of the outer tube 3 is thus restricted to thereby prevent the outer tube 3 from slipping out from the housing 1.

On the other hand, in the steering column having the retaining member 10, when an impact load acts on the housing 1 and the outer tube 3, the inner tube 6 relatively moves inside the outer tube 3 so that impact energy is absorbed. When an end surface 10b of the retaining member 10, facing in the direction indicated by the arrow a1, contacts the stopper 9a, movement of the housing 1 in the direction indicated by the arrow a1 is restricted. Therefore, in the steering column, the amount of retraction, that is, energy absorption stroke (hereinafter, referred to as "E/A stroke") Ls1, at the time of absorbing an impact is set at a predetermined value.

### SUMMARY OF INVENTION

An object of the invention is to provide a steering column in which an E/A stroke required at the time of absorbing an impact is ensured and which is compact in size despite provision of a telescopic mechanism and an impact absorbing mechanism.
The invention relates to a steering column that includes: an inner tube that accommodates a steering shaft which is a rotating shaft of a steering wheel of a vehicle, and that moves in an axial direction of the steering shaft together with the steering shaft; and an outer tube that is held by a housing supported by a vehicle body so as to be movable in the axial direction, and that is coupled with the inner tube. The steering column includes: a telescopic mechanism that adjusts a position of the steering wheel in the axial direction as the inner tube and the outer tube in a coupled state move in the axial direction together with the steering shaft; and an impact absorbing mechanism that absorbs impact energy when coupling of the inner tube and the outer tube is cancelled to retract the steering shaft by a predetermined amount in the axial direction upon application of a force exceeding a coupling force, which couples the inner tube and the outer tube with each other, on the steering shaft or the housing. The steering column has a movement restricting structure that restricts movement of the outer tube in the axial direction, at a portion at which an inner peripheral surface of the housing faces an outer peripheral surface of the outer tube.

With the above configuration, movement of the outer tube in the axial direction may be restricted by the movement restricting structure. Therefore, the outer tube is prevented from slipping off from the housing by the movement restricting structure. Then, when the movement restricting structure is provided, the above-described retaining member may be omitted from the components of the steering column. Therefore, it is possible to reduce the axial length of the steering column by the length of the omitted retaining member.

In the above aspect, the movement restricting structure may be formed of a projecting portion that is provided on the outer peripheral surface of the outer tube so as to project into a gap between the housing and the outer tube and a projecting portion that is provided on an inner peripheral surface of the housing so as to project into the gap, and movement of the outer tube in the axial direction may be restricted when the projecting portion of the outer tube contacts the projecting portion of the housing. With the above configuration, it is possible to easily implement the function of the above aspect by just providing projecting portions respectively on the outer tube and the housing.

In the steering column according to the above aspect, the housing may include a pressing member that is arranged so as to project from the inner peripheral surface of the housing and contact the outer peripheral surface of the outer tube and that presses the outer peripheral surface of the outer tube, and the pressing member may constitute the projecting portion of the housing.

In a steering column, generally, a pressing member that presses the outer peripheral surface of the outer tube is provided on the housing, and the pressing member presses the outer peripheral surface of the outer tube in this way to thereby improve the stiffness of the steering column. On the other hand, as described in the above configuration, when the pressing member is also used as the projecting portion of the housing, no projecting portion needs to be newly provided for the housing. Therefore, it is possible to simplify the structure of the steering column and reduce the cost of the steering column.

In addition, the outer tube may be a cylindrical member and may be formed in such a manner that a curved surface portion that forms an outer edge of the cylindrical shape and a planar portion that is formed by cutting out a portion of the outer peripheral surface into a planar shape are arranged side by side in the axial direction in the outer peripheral surface of the outer tube, and the projecting portion of the outer tube may be formed of a step portion that is formed between the curved surface portion and the planar portion.

With the above configuration, the projecting portion of the outer tube may be provided by just forming the planar portion in the outer peripheral surface of the outer tube. Therefore, the projecting portion of the outer tube may be easily formed.

### BRIEF DESCRIPTION OF DRAWINGS

The foregoing and further features and advantages of the invention will become apparent from the following description of example embodiments with reference to the accompanying drawings, wherein like numerals are used to represent like elements and wherein:
FIG. 1 is a cross-sectional view of a steering column according to an embodiment of the invention;
FIG 2 is a perspective structure diagram of an outer tube of the steering column according to the embodiment;
FIG. 3 is a cross-sectional view that shows an example of action of the steering column according to the embodiment;
FIG. 4 is a cross-sectional view of a steering column according to an alternative embodiment;
FIG. 5 is a perspective structure diagram of an outer tube of the steering column according to the alternative embodiment;
FIG 6 is a cross-sectional view of a steering column according to another alternative embodiment;
FIG. 7 is a cross-sectional view of an existing steering column; and
FIG. 8 is a cross-sectional view of another example of an existing steering column.

### DETAILED DESCRIPTION OF EMBODIMENTS

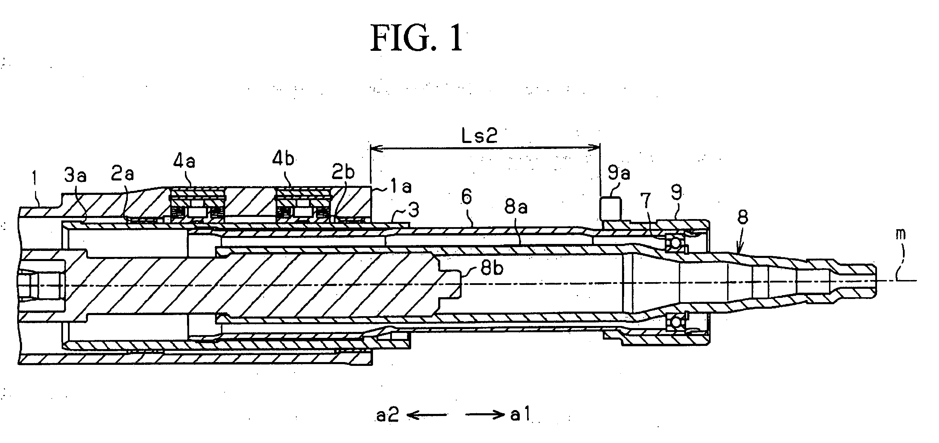

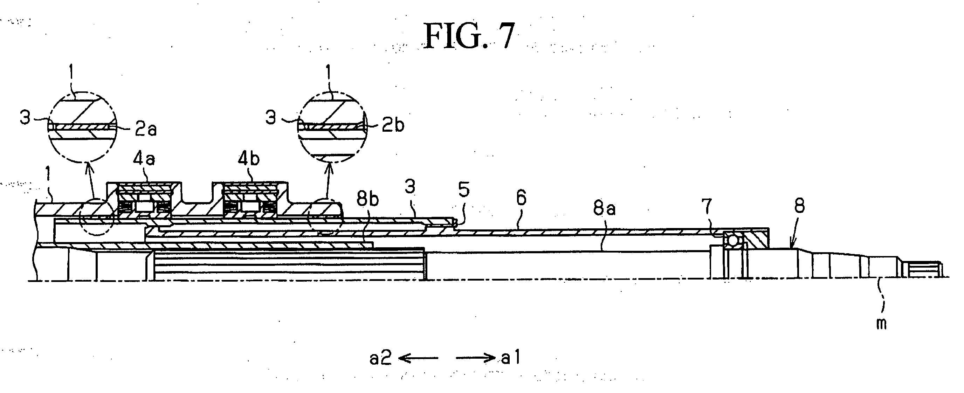

Hereinafter, an embodiment of the invention will be described with reference to the accompanying drawings. FIG. 1 shows the cross-sectional structure of a steering column according to the present embodiment. The structure of the steering column will be described with reference to FIG. 1. Note that the configuration of the steering column shown in FIG. 1 for implementing telescopic action and impact absorbing action is basically similar to that of the steering column shown in FIG 8. That is, in the steering column shown in FIG. 1, a steering shaft 8 extends or retracts in the direction indicated by the arrow a1 or a2 shown in the drawing when an outer tube 3 is moved in the direction indicated by the arrow a1 or a2 shown in the drawing by an actuator (not shown). Such telescopic action is basically the same as described with reference to FIG. 7 and FIG 8. In addition, for example, when a vehicle collides with an obstacle and an impact load acts on a housing 1 and the outer tube 3, coupling of the tubes 3 and 6 is cancelled so that impact energy is absorbed. Such impact absorbing action is basically the same as described with reference to FIG. 7 and FIG 8.

However, in the steering column, when coupling of the tubes 3 and 6 is cancelled, the upper end surface 1a of the housing 1 contacts a stopper 9a to restrict movement of the housing 1 in the direction indicated by the arrow a1. That is, in the steering column, the amount of retraction (E/A stroke) at the time of absorbing an impact is set to a length indicated by Ls2 in the drawing when a relative positional relationship between the housing 1 and the outer tube 3 is the positional relationship shown in the drawing.

As shown in FIG 1, in the steering column, almost the entire outer tube 3 is accommodated inside the housing 1, and the center portion of the outer peripheral surface of the outer tube 3 is pressed by two tensioner bushings 4a and 4b. Then, a projecting portion 3a that projects into a gap between the outer tube 3 and the housing 1 is formed on the outer peripheral surface of the base end portion of the outer tube 3.

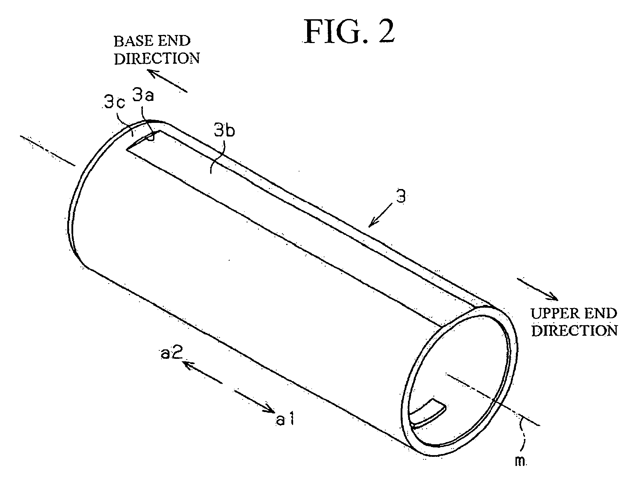

Next, the structure of the outer tube 3 will be specifically described with reference to FIG 2. As shown in FIG 2, the outer tube 3 is a cylindrical member, and a planar portion 3b is formed in the outer peripheral surface of the outer tube 3 while a curved surface portion 3c that forms the outer edge of the cylinder is left at the base end portion side. The planar portion 3b is formed by cutting out a portion of the outer peripheral surface into a planar shape from the upper end portion toward the base end portion. That is, the planar portion 3b and the curved surface portion 3c are arranged side by side in a direction of an axis m. Thus, the projecting portion 3a is formed of a step portion between these planar portion 3b and curved surface portion 3c. When the projecting portion 3a is formed of the step portion between the planar portion 3b and the curved surface portion 3c as described above, the projecting portion 3a may be formed by just forming the planar portion 3b in the outer peripheral surface of the outer tube 3. Therefore, it is possible to easily form the projecting portion 3a.

Here, the planar portion 3b is a portion pressed by the tensioner bushings 4a and 4b. The portion pressed by the tensioner bushings 4a and 4b is formed in a planar shape in this way to thereby increase the pressure receiving area of the outer tube 3. Thus, a force acting from the tensioner bushings 4a and 4b on the outer tube 3 may be increased. Therefore, the stiffness of the steering column increases. Meanwhile, the projecting portion 3a functions as a portion that restricts movement of the outer tube 3 in the direction indicated by the arrow a1 when the outer tube 3 moves in the direction indicated by the arrow a1 due to extending or retracting action.

Note that, in the present embodiment, the outside diameter of the outer tube 3 is substantially equal to or slightly smaller than the inside diameter of each of bearings 2a and 2b shown in FIG. 1. Therefore, a slight gap is formed between the inner peripheral surface of each of the bearings 2a and 2b and the planar portion 3b.

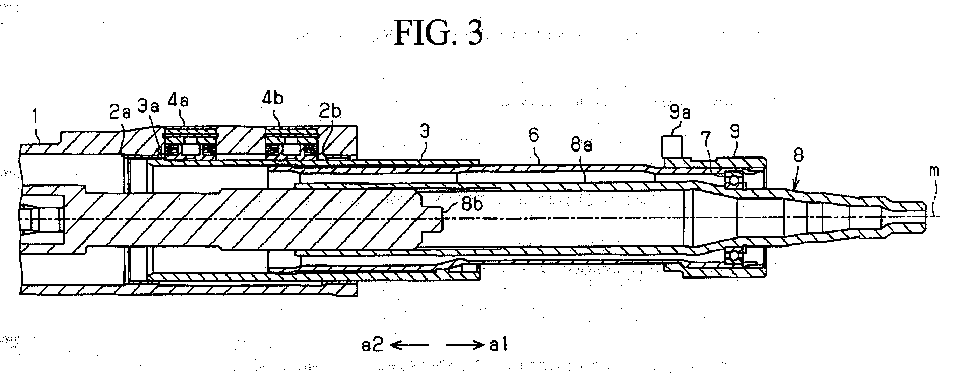

Next, an example of action of the steering column when the outer tube 3 moves in the direction indicated by the arrow al will be described with reference to FIG. 3. When the outer tube 3 moves in the direction indicated by the arrow a1, the projecting portion 3a passes in the gap between the outer tube 3 and the bearing 2a and then contacts the end surface of the tensioner bushing 4a. As a result, the positional relationship shown in FIG. 3 is established. The projecting portion 3a contacts the end surface of the tensioner bushing 4a to thereby restrict movement of the outer tube 3 in the direction indicated by the arrow a1. In the present embodiment, a movement restricting structure that restricts movement of the outer tube 3 in the direction indicated by the arrow a1 is formed of the projecting portion 3a of the outer tube 3 and the tensioner bushing 4a. The movement restricting structure prevents the outer tube 3 from slipping off from the housing 1.

When the movement restricting structure is provided, for example, the retaining member of the existing art may be omitted. Therefore, the axial length of the steering column may be reduced by the length of the retaining member.

In addition, in the present embodiment, the bolt for assembling the retaining member to the housing may also be omitted in addition to the retaining member. Therefore, the number of components may be reduced. As a result, it is possible to reduce the weight and cost of the steering column.

Furthermore, in the present embodiment, the tensioner bushing 4a is used as a member that restricts movement of the projecting portion 3a. Therefore, a member that restricts movement of the projecting portion 3a need not be provided in the housing 1. Therefore, it is possible to simplify the structure of the steering column and reduce the cost of the steering column.

As described above, with the steering column according to the present embodiment, the following advantageous effects may be obtained.
1) The projecting portion 3a is formed on the outer tube 3, and the projecting portion 3a is brought into contact with the tensioner bushing 4a to thereby restrict movement of the outer tube 3 in the direction indicated by the arrow a1. Thus, the above-described retaining member may be omitted. Therefore, even when the telescopic mechanism and the impact absorbing mechanism are provided, it is possible to downsize the steering column while ensuring an E/A stroke required at the time of absorbing an impact. Because the number of components is reduced, it is possible to reduce the weight and cost of the steering column.
2) The tensioner bushing 4a is used as a member that restricts movement of the projecting portion 3a. Thus, a member that restricts movement of the projecting portion 3a need not be provided in the housing 1. Therefore, it is possible to simplify the structure of the steering column and reduce the cost of the steering column.
3) The planar portion 3b is formed in the outer peripheral surface of the outer tube 3, and the projecting portion 3a is formed of the step portion between the planar portion 3b and the curved surface portion 3c. Thus, the projecting portion 3a may be provided by just forming the planar portion 3b in the outer peripheral surface of the outer tube 3. Therefore, it is easy to form the projecting portion 3 a.

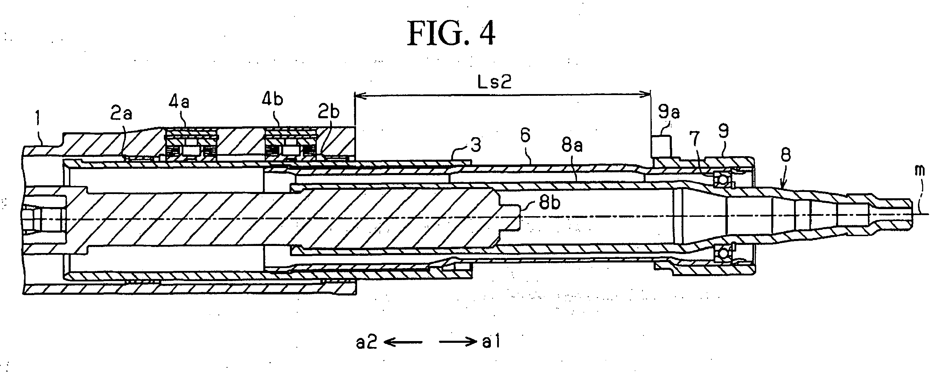

Note that the above-described embodiment may be modified into the following alternative embodiments.
In the above-described embodiment, the axial length of the steering column is reduced by the length of the omitted retaining member. Instead, for example, as shown in FIG. 4, a structure in which the retaining member is just omitted may be employed. With this configuration, it is possible to obtain an advantageous effect that the E/A stroke Ls2 is made longer than the E/A stroke Ls1 without reducing the axial length of the steering column.

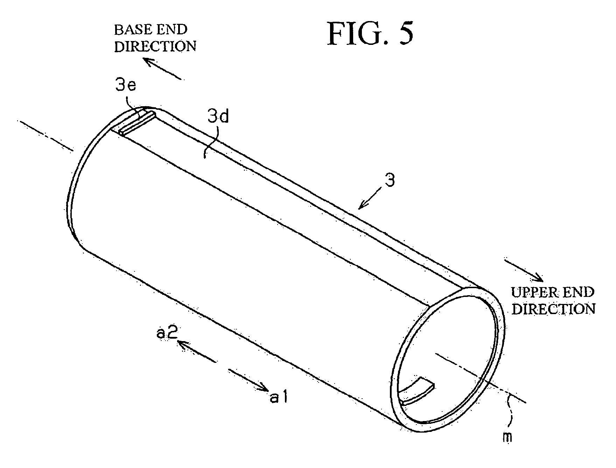

In the above-described embodiment, the projecting portion 3a is formed of the step portion between the planar portion 3b and the curved surface portion 3c that are formed in the outer peripheral surface of the outer tube 3. Instead, for example, as shown in FIG. 5, a planar portion 3d that extends from the upper end portion toward the base end portion may be formed in the outer peripheral surface of the outer tube 3 and then a projecting portion 3e may be formed on the planar portion 3d.

In the above-described embodiment, the projecting portion 3a is brought into contact with the tensioner bushing 4a that serves as a pressing member to thereby restrict movement of the outer tube 3. Instead, for example, the projection amount of the projecting portion 3a may be adjusted, and then the projecting portion 3a may be brought into contact with the bearing 2a to thereby restrict movement of the outer tube 3. In addition, for example, a projecting portion may be formed on the outer peripheral surface of the center portion of the outer tube 3 so as to be located between the tensioner bushings 4a and 4b, and then the projecting portion is brought into contact with the tensioner bushing 4b to thereby restrict movement of the outer tube 3. Furthermore, for example, a projecting portion may be newly formed on the inner wall surface of the housing 1and then the newly formed projecting portion may be used to restrict movement of the projecting portion 3a. Note that a method of newly forming a projecting portion on the inner wall surface of the housing 1 may be an appropriately employed method, such as forming a projecting portion by machining the inner wall surface of the housing 1 and embedding a bolt in the inner wall surface of the housing 1. That is, any movement restricting structure may be employed as long as the movement restricting structure is formed of a projecting portion provided on the outer peripheral surface of the outer tube 3 so as to project into the gap between the housing 1 and the outer tube 3 and a projecting portion provided on the inner wall surface of the housing 1 so as to project into the gap and the projecting portion of the outer tube 3 contacts the projecting portion of the housing 1 to thereby restrict movement of the outer tube 3 in the direction indicated by the arrow a1.

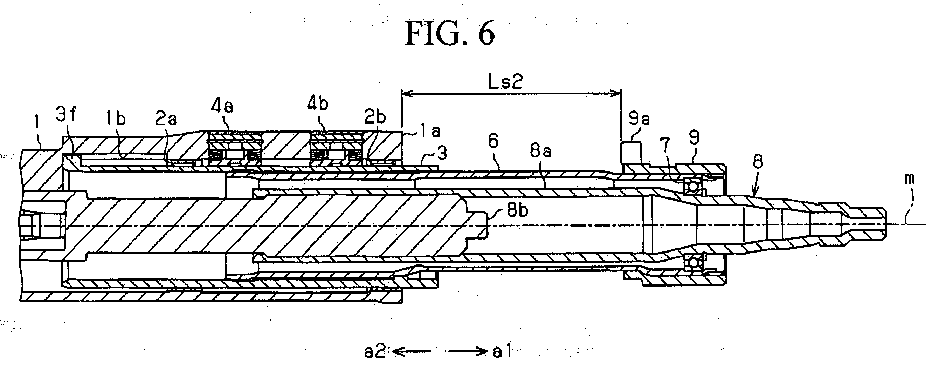

In the above-described embodiment, the projecting portion provided on the outer peripheral surface of the outer tube 3 is brought into contact with the projecting portion provided on the inner wall surface of the housing 1 to thereby restrict movement of the outer tube 3. Instead, for example, as shown in FIG 6, a groove 1b may be formed in the inner wall surface of the housing 1, a projecting portion 3f to be inserted in the groove 1b may be formed on the outer peripheral surface of the outer tube 3, and the projecting portion 3f may contact the inner wall surface of the groove 1b in the direction indicated by the arrow a1 to thereby restrict movement of the outer tube 3 in the direction indicated by the arrow al. That is, any movement restricting structure may be employed as long as the movement restricting structure is provided at a portion at which the inner wall surface of the housing 1 faces the outer wall surface of the outer tube 3 and restricts movement of the outer tube 3 in the direction of the axis m.

Next, a technical idea derived from the above embodiment and its alternative embodiments will be appended.

1) A steering column is configured in such a manner that the projecting portion of the housing is formed by machining the inner peripheral surface of the housing. With the above configuration, the projecting portion of the housing may be easily formed.

## Claims

1. A steering column comprising:
an inner tube (6) that accommodates a steering shaft (8) which is a rotating shaft of a steering wheel of a vehicle, and that moves in an axial direction of the steering shaft (8) together with the steering shaft (8);
an outer tube (3) that is held by a housing (1) supported by a vehicle body so as to be movable in the axial direction, and that is coupled with the inner tube (6);
a telescopic mechanism that adjusts a position of the steering wheel in the axial direction as the inner tube (6) and the outer tube (3) in a coupled state move in the axial direction together with the steering shaft (8); and
an impact absorbing mechanism that absorbs impact energy when coupling of the inner tube (6) and the outer tube (3) is cancelled to retract the steering shaft (8) by a predetermined amount (Ls2) in the axial direction upon application of a force exceeding a coupling force, which couples the inner tube (6) and the outer tube (3) with each other, on the steering shaft (8) or the housing (1), **characterized in that**
the steering column has a movement restricting structure that restricts movement of the outer tube (3) in the axial direction, at a portion at which an inner peripheral surface of the housing (1) faces an outer peripheral surface of the outer tube (3).

2. The steering column according to claim 1, wherein:
the movement restricting structure is formed of a projecting portion (3a) that is provided on the outer peripheral surface of the outer tube (3) so as to project into a gap between the housing (1) and the outer tube (3) and a projecting portion that is provided on an inner peripheral surface of the housing (1) so as to project into the gap; and
movement of the outer tube (3) in the axial direction is restricted when the projecting portion (3a) of the outer tube (3) contacts the projecting portion of the housing (1).

3. The steering column according to claim 2, wherein:
the housing (1) includes a pressing member (4a) that is arranged so as to project from the inner peripheral surface of the housing (1) and contact the outer peripheral surface of the outer tube (3) and that presses the outer peripheral surface of the outer tube (3); and
the pressing member (4a) constitutes the projecting portion of the housing (1).

4. The steering column according to claim 3, wherein:
the outer tube (3) is a cylindrical member and is formed in such a manner that a curved surface portion (3c) that forms an outer edge of the cylindrical shape and a planar portion (3b) that is formed by cutting out a portion of the outer peripheral surface into a planar shape are arranged side by side in the axial direction on the outer peripheral surface of the outer tube (3); and
the projecting portion (3a) of the outer tube (3) is formed of a step portion that is formed between the curved surface portion (3c) and the planar portion (3b).

## Patentansprüche

1. Lenksäule mit:
einem Innenrohr (6), das eine Lenkwelle (8) beherbergt, die eine Drehwelle eines Lenkrads eines Fahrzeugs ist, und das sich in eine axiale Richtung der Lenkwelle (8) zusammen mit der Lenkwelle (8) bewegt;
einem Außenrohr (3), das von einem Gehäuse (1) gehalten wird, das von einem Fahrzeugaufbau gestützt ist, so dass es in die axiale Richtung bewegbar ist, und das mit dem Innenrohr (6) gekoppelt ist;
einem Teleskopmechanismus, der eine Position des Lenkrads in der axialen Richtung einstellt, indem sich das Innenrohr (6) und das Außenrohr (3) in einem gekoppelten Zustand zusammen mit der Lenkwelle (8) in die axiale Richtung bewegen; und
einem Aufprallabsorbtionsmechanismus, der eine Aufprallenergie absorbiert, wenn das Koppeln des Innenrohrs (6) und des Außenrohrs (3) aufgehoben wird, um die Lenkwelle (8) um einen vorherbestimmten Betrag (Ls2) in die axiale Richtung auf eine auf die Lenkwelle (8) oder das Gehäuse (1) aufgebrachte Kraft hin zurückzuziehen, die eine Kopplungskraft übersteigt, die das Innenrohr (6) und das Außenrohr (3) miteinander koppelt, **dadurch gekennzeichnet, dass**
die Lenksäule eine Bewegungsbeschränkungsstruktur hat, die eine Bewegung des Außenrohrs (3) in die axiale Richtung an einem Abschnitt beschränkt, an dem eine innere Umfangsfläche des Gehäuses (1) einer äußeren Umfangsfläche des Außenrohrs (3) zugewandt ist.

2. Lenksäule nach Anspruch 1, wobei:
die Bewegungsbeschränkungsstruktur aus einem vorstehenden Abschnitt (3a), der an der äußeren Umfangsfläche des Außenrohrs (3) vorgesehen ist, so dass er in einen Spalt zwischen dem Gehäuse (1) und dem Außenohr (3) vorsteht, und einem vorstehenden Abschnitt, der an einer inneren Umfangsfläche des Gehäuses (1) vorgesehen ist, so dass er in den Spalt vorsteht; und
eine Bewegung des Außenrohrs (3) in die axiale Richtung beschränkt ist, wenn der vorstehende Abschnitt (3a) des Außenrohrs (3) den vorstehenden Abschnitt des Gehäuses (1) berührt.

3. Lenksäule nach Anspruch 2, wobei:
das Gehäuse (1) ein Presselement (4a) umfasst, das angeordnet ist, so dass es von der inneren Umfangsfläche des Gehäuses (1) vorsteht, die äußere Umfangsfläche des Außenrohrs (3) berührt und die äußere Umfangsfläche des Außenrohrs (3) presst; und
das Presselement (4a) den vorstehenden Abschnitt des Gehäuses (1) darstellt.

4. Lenksäule nach Anspruch 3, wobei:
das Außenrohr (3) ein zylindrisches Element ist und auf eine solche Art und Weise ausgebildet ist, das ein gebogener Flächenabschnitt (3c), der einen Außenrand der zylindrischen Form ausbildet, und ein ebener Abschnitt (3b), der durch Ausschneiden eines Abschnitts der äußeren Umfangsfläche in eine ebene Form ausgebildet ist, nebeneinander in der axialen Richtung auf der äußeren Umfangsfläche des Außenrohrs (3) angeordnet sind; und
der vorstehende Abschnitt (3a) des Außenrohrs (3) aus einem Stufenabschnitt ausgebildet ist, der zwischen dem gebogenen Flächenabschnitt (3c) und dem ebenen Abschnitt (3b) ausgebildet ist.

## Revendications

1. Colonne de direction comprenant :
un tube intérieur (6) qui loge un arbre de direction (8) qui est un arbre de rotation d'un volant de direction d'un véhicule, et qui se déplace dans une direction axiale de l'arbre de direction (8) et en association avec celui-ci;
un tube extérieur (3) qui est maintenu par un boîtier (1) supporté par une carrosserie de véhicule de manière à pouvoir se déplacer dans la direction axiale, et qui est couplé au tube intérieur (6) ;
un mécanisme télescopique qui ajuste une position du volant de direction dans la direction axiale comme le tube intérieur (6) et le tube extérieur (3) dans un état couplé, se déplacent dans la direction axiale en association avec l'arbre de direction (8) ; et
un mécanisme d'absorption de chocs qui absorbe l'énergie de choc lorsque le couplage du tube intérieur (6) et du tube extérieur (3) est annulé pour rétracter l'arbre de direction (8) d'une quantité prédéterminée (Ls2) dans la direction axiale lors de l'application d'une force dépassant une force de couplage, qui relie le tube intérieur (6) et le tube extérieur (3) l'un à l'autre, sur l'arbre de direction (8) ou le boîtier (1), **caractérisée en ce que**
la colonne de direction comporte une structure de limitation de mouvement qui limite le mouvement du tube extérieur (3) dans la direction axiale, au niveau d'une partie à laquelle une surface périphérique intérieure du boîtier (1) fait face à une surface périphérique extérieure du tube extérieur (3).

2. Colonne de direction selon la revendication 1, dans laquelle :
la structure de limitation de mouvement est formée d'une partie en saillie (3a) qui est prévue sur la surface périphérique extérieure du tube extérieur (3) de manière à faire saillie dans un espace entre le boîtier (1) et le tube extérieur (3) et une partie en saillie qui est prévue sur une surface périphérique intérieure du boîtier (1) de manière à faire saillie dans l'espace ; et
le mouvement du tube extérieur (3) dans la direction axiale est limité lorsque la partie en saillie (3a) du tube extérieur (3) entre en contact avec la partie en saillie du boîtier (1).

3. Colonne de direction selon la revendication 2, dans laquelle :
le boîtier (1) comporte un élément de pression (4a) qui est agencé de manière à faire saillie depuis la surface périphérique intérieure du boîtier (1) et qui entre en contact avec la surface périphérique extérieure du tube extérieur (3) et qui appuie sur la surface périphérique extérieure du tube extérieur (3) ; et
l'élément de pression (4a) constitue la partie en saillie du boîtier (1).

4. Colonne de direction selon la revendication 3, dans laquelle :
le tube extérieur (3) est un élément cylindrique et est formé de sorte qu'une partie de surface courbée (3c) qui forme un bord extérieur de la forme cylindrique et qu'une partie planaire (3b) qui est formée en découpant une partie de la surface périphérique extérieure en une forme planaire soient disposées côte à côte dans la direction axiale sur la surface périphérique extérieure du tube extérieur (3) ; et
la partie en saillie (3a) du tube extérieur (3) est formée d'une partie étagée qui est formée entre la partie de surface courbée (3c) et la partie planaire (3b).
